# FASCICULE DE BREVET EUROPEEN

(11) **EP 3 713 783 B1**
(45) Date de publication et mention de la délivrance du brevet: **15.11.2023**
(21) Numéro de dépôt: 18816201.0
(22) Date de dépôt: 20.11.2018
(51) Int. Cl.: B60G 21/055, B21D 7/08, B21D 53/88

(54) **PROCÉDÉ DE FABRICATION D'UNE BARRE STABILISATRICE POUR UN VÉHICULE**
VERFAHREN ZUR HERSTELLUNG EINES STABILISATORS FÜR EIN FAHRZEUG
METHOD FOR MANUFACTURING A STABILISER BAR FOR A VEHICLE

(30) Priorité: 20.11.2017 FR 1760925
(43) Date de publication de la demande: 30.09.2020
(73) Titulaire: Sogefi Suspensions, 78280 Guyancourt (FR)
(72) Inventeur: LANCIEN, Jean-François, 88110 Raon L'etape (FR)
(74) Mandataire: Cabinet Beau de Loménie
(86) Numéro de dépôt international: PCT/FR2018/052930
(87) Numéro de publication internationale: WO 2019/097198

(56) Documents cités:
- EP-A1- 2 674 279
- EP-A2- 1 304 242
- WO-A1-2005/070580
- FR-A1- 2 966 088

## Description

### DOMAINE DE L'INVENTION

Le présent exposé concerne un procédé de fabrication d'une barre stabilisatrice.

### ÉTAT DE LA TECHNIQUE ANTÉRIEURE

La plupart des véhicules à essieux sont pourvus d'ensembles stabilisateurs qui sont tels que les deux roues d'un même essieu sont généralement reliées par une barre stabilisatrice, également appelée barre anti-dévers ou barre anti-roulis.

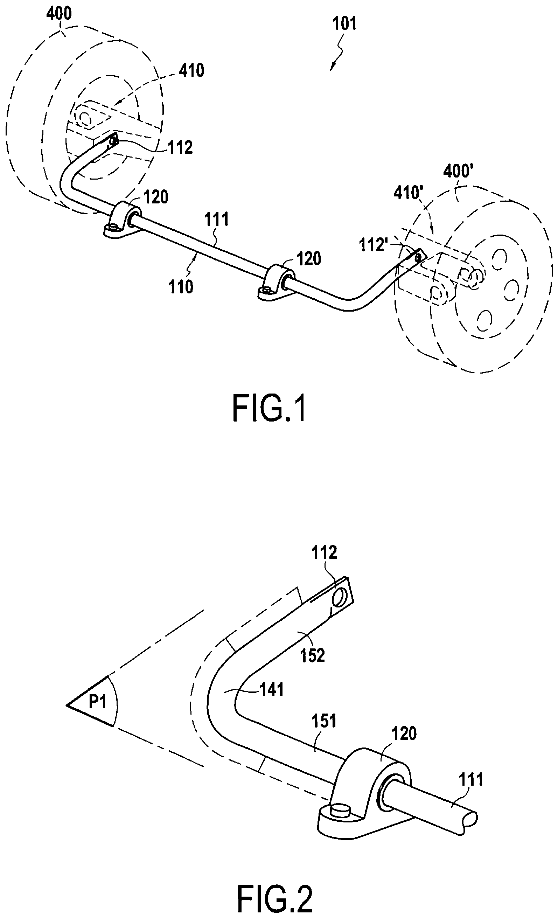

Un ensemble stabilisateur pour véhicule connu comprenant une telle barre stabilisatrice est représenté sur la FIG 1.

L'ensemble stabilisateur 101 pour véhicule comprend une barre stabilisatrice 110. La barre stabilisatrice 110 est installée entre deux roues 400, 400' d'un même essieu. À cet effet, la barre stabilisatrice 110 est munie à ses extrémités de deux portions de fixation 112, 112'. La portion de fixation 112 est prévue pour être fixée à une partie du véhicule solidaire de la roue 400, dans le cas présent à un triangle de suspension 410 de la roue 400 via des biellettes (non représentées). De même, la portion de fixation 112' est prévue pour être fixée à une partie du véhicule solidaire de la roue 400', dans le cas présent à un triangle de suspension 410' de la roue 400' via des biellettes (non représentées).

La barre stabilisatrice 110 est donc un élément de suspension du véhicule qui forme un ressort tendant à solidariser les deux roues 400, 400', et qui permet ainsi de limiter le roulis lors des virages et de réduire les déformations subies par la suspension de manière à maintenir le plus possible les pneus à plat sur le sol et donc à conserver une adhérence maximale. La barre stabilisatrice 110 peut donc être sollicitée à la fois en torsion et en flexion.

La barre stabilisatrice 110 comprend aussi une portion centrale 111, qui est allongée. Deux paliers 120 destinés à être fixés sur le châssis du véhicule sont montés sur la barre stabilisatrice 110.

La barre stabilisatrice 110 est métallique, et typiquement fabriquée en acier.

En général, la barre stabilisatrice 110 est l'une des pièces du véhicule dont la forme est définie en dernier, en fonction de l'espace qui n'est pas déjà occupé par d'autres éléments du véhicule, comme par exemple des éléments structurels ou des éléments de suspension. La forme de la barre stabilisatrice 110 peut donc être relativement complexe. En pratique, cette forme est obtenue par cintrage d'un produit métallique, typiquement en acier, allongé et rectiligne, aussi appelé lopin.

La FIG 2 représente plus en détail une forme typique de la barre stabilisatrice 110 obtenue par un tel cintrage. Le document EP 1 304 242 divulgue également un procédé de fabrication d'une telle barre typique selon le préambule de la revendication 1. Lors d'un tel cintrage, le lopin est déformé localement en flexion élastoplastique, à froid ou à chaud. Cette flexion élastoplastique conduit localement à un arc plan, qui est le plus souvent circulaire. On voit ainsi sur la FIG 2 que, entre la portion centrale 111 et la portion de fixation 112, la barre stabilisatrice 110 obtenue présente un arc plan (aussi appelé coude 141) contenu dans un plan P1, là où le lopin métallique a été déformé localement, et de portions droites 151, 152, là où le lopin métallique n'a pas été déformé localement.

Lorsque la barre stabilisatrice 110 doit adopter une forme plus complexe en raison de l'encombrement du véhicule, elle peut aussi présenter plusieurs coudes séparés par des portions droites, les coudes étant contenus dans des plans différents les uns des autres de manière à donner à la barre stabilisatrice 110 une forme tridimensionnelle.

Toutefois, les coudes sont des régions particulièrement critiques du point de vue de la résistance mécanique, et tout particulièrement le coude 141, d'une part à cause de sa position (la plus proche du palier 120) au sein de la barre stabilisatrice 110, laquelle position conduit à un maximum de chargement à la fois en torsion et en flexion, et d'autre part en raison de sa forme même de coude, qui conduit à une concentration de contraintes. Il est donc absolument impératif de dimensionner la barre stabilisatrice 110, et donc le lopin métallique, de telle sorte que le coude 141 présente la résistance mécanique nécessaire.

Or, en pratique, le lopin métallique (et donc aussi la barre stabilisatrice 110) présente très fréquemment une section et un diamètre constants le long de toute sa longueur. Il en résulte que le dimensionnement de la barre stabilisatrice 110 au niveau du coude 141 détermine le dimensionnement de la barre stabilisatrice 110 tout entière. La barre stabilisatrice 110 est donc dimensionnée de façon adéquate au niveau du coude 141 mais surdimensionnée ailleurs, et ce tout particulièrement si la barre stabilisatrice 110 est prévue pour résister à de très fortes sollicitations. Ce surdimensionnement conduit à un excès de masse de la barre stabilisatrice et donc du véhicule.

Il existe donc un réel besoin pour une barre stabilisatrice pour véhicule ainsi qu'un procédé de fabrication d'une telle barre stabilisatrice qui soient dépourvus, au moins en partie, des inconvénients inhérents aux configurations connues précitées.

### PRÉSENTATION DE L'INVENTION

Le présent exposé concerne une barre stabilisatrice pour un véhicule (non revendiquée). Elle comprend une portion centrale, laquelle est allongée, et une première portion de fixation et une deuxième portion de fixation chacune prévue pour être fixée à une partie du véhicule solidaire d'une roue du véhicule, la barre stabilisatrice comprenant, entre la portion centrale et la première portion de fixation, une première portion courbée selon une première courbe gauche dépourvue de segments de droite.

Dans le présent exposé, on entend par « courbe gauche » une courbe continue dans l'espace qui n'est pas entièrement comprise dans un plan. Ainsi, à titre d'exemple, un segment de droite et un arc de cercle ne sont pas des courbes gauches. Toujours à titre d'exemple, une hélice cylindrique est une courbe gauche.

Grâce au fait que la première portion de la barre stabilisatrice soit courbée selon une courbe gauche dépourvue de segments de droite, elle ne présente pas de coude plan. Par conséquent, la courbure de la première portion, qui est un facteur de concentration de contraintes, est plus faible, et les contraintes mécaniques sont donc réparties plus uniformément dans la première portion que dans les configurations connues précitées. On peut donc obtenir ou bien une barre stabilisatrice avec de meilleures propriétés mécaniques en partant d'un lopin métallique identique, ou bien une barre stabilisatrice plus légère avec des propriétés mécaniques identiques. Il est ainsi possible d'obtenir un gain en masse d'environ 15% par rapport à une barre stabilisatrice réalisée dans le même acier.

Dans certains modes de réalisation, la première courbe gauche est un arc d'hélice cylindrique, de préférence un arc d'hélice circulaire.

Dans le présent exposé, on entend par « hélice cylindrique » une courbe régulière tracée sur un cylindre à base quelconque et coupant les génératrices du cylindre suivant un angle constant. Une hélice cylindrique est donc un cas particulier de courbe gauche. Une hélice circulaire est une hélice cylindrique tracée sur un cylindre à base circulaire. On entend par « arc d'hélice cylindrique » une portion contiguë d'une hélice cylindrique, et par « arc d'hélice circulaire » une portion contiguë d'une hélice circulaire.

Dans d'autres modes de réalisation, la première courbe gauche est un arc d'hélice conique.

Dans le présent exposé, on entend par « hélice conique » une courbe régulière tracée sur un cône de révolution et faisant un angle constant avec l'axe de ce cône de révolution. Une hélice conique est donc un autre cas particulier de courbe gauche. On entend par « arc d'hélice conique » une portion contiguë d'une hélice conique.

Dans certains modes de réalisation, la première courbe gauche présente un rayon de courbure qui est croissant le long de la première portion courbée à mesure que l'on s'éloigne de la portion centrale.

Dans certains modes de réalisation, la première courbe gauche présente un rayon de courbure qui est décroissant le long de la première portion courbée à mesure que l'on s'éloigne de la portion centrale.

Dans certains modes de réalisation, la barre stabilisatrice comprend en outre, entre la portion centrale et la deuxième portion de fixation, une deuxième portion courbée selon une deuxième courbe gauche dépourvue de segments de droite.

Grâce au fait que la deuxième portion de la barre stabilisatrice soit courbée selon une courbe gauche dépourvue de segments de droite, elle ne présente pas de coude plan, ce qui procure les mêmes avantages que pour la première portion courbée.

Dans certains modes de réalisation, la première courbe gauche et la deuxième courbe gauche sont symétriques.

Le présent exposé concerne également un procédé de fabrication d'une barre stabilisatrice pour un véhicule selon la revendication 1. Ce procédé comprend la fourniture d'un lopin métallique présentant une première extrémité et une deuxième extrémité, et le cintrage de la première extrémité à l'aide d'un dispositif de cintrage, ledit cintrage de la première extrémité comprenant le fait de provoquer un déplacement relatif entre le dispositif de cintrage et le lopin métallique, et,
pendant ledit déplacement relatif, fléchir la première extrémité dans un premier plan de cintrage et simultanément appliquer à la première extrémité un effort selon une direction non comprise dans le premier plan de cintrage, de sorte que la première extrémité est courbée selon une première courbe gauche dépourvue de segments de droite.

Avec ce procédé de fabrication, on obtient une barre stabilisatrice du type qui vient d'être décrit, avec les mêmes avantages. Notamment, grâce au fait que la première extrémité soit courbée selon une courbe gauche dépourvue de segments de droite, elle ne présente pas de coude plan, et les contraintes mécaniques y sont donc réparties plus uniformément que dans les configurations connues précitées.

Selon l'invention, le dispositif de cintrage comprend un jeu de galets, et le jeu de galets comprend au moins une paire de galets qui est mobile dans le premier plan de cintrage, la première extrémité étant fléchie dans le premier plan de cintrage par ladite au moins une paire de galets.

Selon l'invention, le dispositif de cintrage comprend au moins un rouleau orientable mobile, ledit effort selon une direction non comprise dans le premier plan de cintrage étant appliqué à la première extrémité par ledit au moins un rouleau orientable mobile.

Dans certains modes de réalisation, le dispositif de cintrage comprend un mors mobile prévu pour saisir le lopin métallique, ledit déplacement relatif entre le dispositif de cintrage et le lopin métallique étant provoqué par ledit mors mobile.

Dans certains modes de réalisation, le procédé comprend en outre le cintrage de la deuxième extrémité du lopin métallique à l'aide du dispositif de cintrage, ledit cintrage de la deuxième extrémité comprenant le fait de provoquer un déplacement relatif entre le dispositif de cintrage et le lopin métallique, et, pendant ledit déplacement relatif, fléchir la deuxième extrémité dans un deuxième plan de cintrage et simultanément appliquer à la deuxième extrémité un effort selon une direction non comprise dans le deuxième plan de cintrage, de sorte que la deuxième extrémité est courbée selon une deuxième courbe gauche dépourvue de segments de droite.

Grâce au fait que la deuxième extrémité soit courbée selon une courbe gauche dépourvue de segments de droite, elle ne présente pas de coude plan, ce qui procure les mêmes avantages que la première portion courbée.

Dans certains modes de réalisation, le lopin métallique présente une section circulaire, elliptique, ovale, ou ovoïde. Cette section peut être pleine ou bien être creuse.

La barre stabilisatrice peut ainsi être fabriquée à partir du même produit de départ que les barres stabilisatrices connues décrites plus haut.

Dans certains modes de réalisation, le lopin métallique présente une section variable le long de sa longueur.

Il est ainsi possible d'optimiser au mieux le dimensionnement du lopin métallique, et donc de réaliser un gain en masse du véhicule.

Les caractéristiques et avantages précités, ainsi que d'autres, apparaîtront à la lecture de la description détaillée qui suit, d'exemples de réalisation de la barre stabilisatrice et du procédé de fabrication proposés. Cette description détaillée fait référence aux dessins annexés.

### BRÈVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue en perspective d'un ensemble stabilisateur pour véhicule connu.
La FIG 2 est une vue en perspective de la barre stabilisatrice de l'ensemble stabilisateur pour véhicule de la FIG 1.
La FIG 3 est une vue en perspective d'un exemple d'ensemble stabilisateur pour véhicule selon l'exposé.
La FIG 4A est une vue en perspective de la barre stabilisatrice de l'ensemble stabilisateur pour véhicule de la FIG 3.
Les FIG 4B, 4C, 4D et 4E sont des vues respectivement selon les directions B, C, D, et E de la FIG 4A.
La FIG 5 est une vue de face montrant un exemple de procédé de fabrication de la barre stabilisatrice de la FIG 4A et le dispositif de fabrication associé.
La FIG 6 est une vue selon la direction VI de la FIG 5.
La FIG 7 est une vue de face analogue à celle de la FIG 5 et montrant la suite de la fabrication de la barre stabilisatrice.
La FIG 8 est une vue selon la direction VIII de la FIG 7.

### DESCRIPTION DÉTAILLÉE D'EXEMPLE(S) DE RÉALISATION

Afin de rendre plus concrète l'invention, des exemples d'ensembles stabilisateurs (non revendiquées) et de procédés de fabrication sont décrits en détail ci-après, en référence aux dessins annexés.

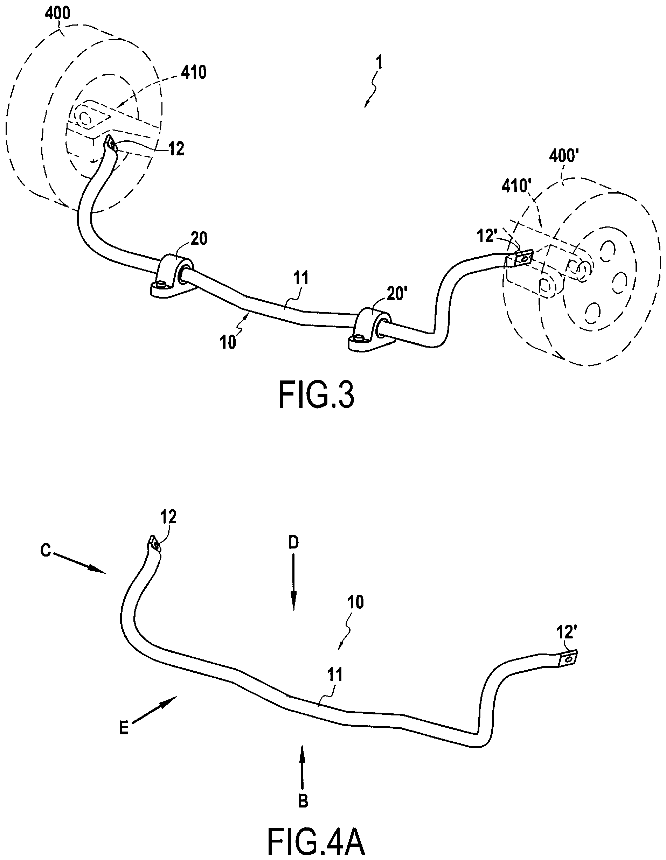

Un exemple d'ensemble stabilisateur 1 est représenté sur la FIG 3.

L'ensemble stabilisateur 1 pour véhicule comprend une barre stabilisatrice 10. La barre stabilisatrice 10 est installée entre deux roues 400, 400' d'un même essieu. À cet effet, la barre stabilisatrice 10 est munie à ses extrémités de deux portions de fixation 12, 12'. La portion de fixation 12 est prévue pour être fixée à une partie du véhicule solidaire de la roue 400, dans le cas présent à un triangle de suspension 410 de la roue 400 via des biellettes (non représentées). De même, la portion de fixation 12' est prévue pour être fixée à une partie du véhicule solidaire de la roue 400', dans le cas présent à un triangle de suspension 410' de la roue 400' via des biellettes (non représentées).

La barre stabilisatrice 10 est donc un élément de suspension du véhicule qui forme un ressort tendant à solidariser les deux roues 400, 400'. La barre stabilisatrice 10 peut donc être sollicitée à la fois en torsion et en flexion.

La barre stabilisatrice 10 comprend aussi une portion centrale 11, qui est allongée. Deux paliers 20, 20' destinés à être fixés sur le châssis du véhicule peuvent être montés sur la barre stabilisatrice 10. Le palier 20 peut être monté entre la portion centrale 11 et la portion de fixation 12. Le palier 20' peut être monté entre la portion centrale 11 et la portion de fixation 12'.

La barre stabilisatrice 10 est métallique, et typiquement fabriquée en acier.

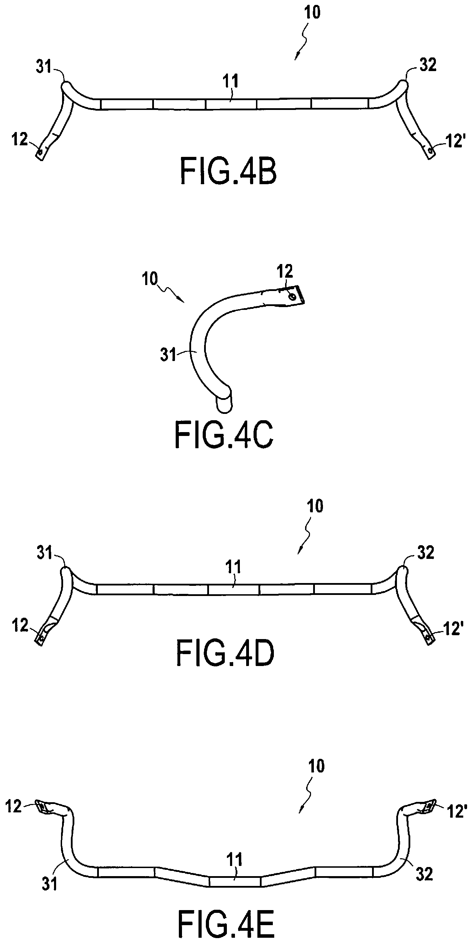

Comme on peut le voir sur les FIG 4B à 4E, entre la partie centrale 11 et la partie de fixation 12, la barre stabilisatrice 10 présente une première portion courbée 31. La première portion courbée 31 est courbée selon une première courbe gauche. Ainsi, la première portion courbée 31 n'est pas entièrement comprise dans un seul plan. De plus, la première courbe gauche est dépourvue de segments de droite.

Grâce au fait que la première portion courbée 31 soit courbée selon une courbe gauche dépourvue de segments de droite, elle ne présente pas de coude plan. Par conséquent, la courbure de la première portion, qui est un facteur de concentration de contraintes, est plus faible, et les contraintes mécaniques sont donc réparties plus uniformément dans la première portion courbée 31 que dans les coudes plans de la barre stabilisatrice 110 connue. Par rapport à la barre stabilisatrice 110 connue, la barre stabilisatrice 10 peut donc présenter de meilleures propriétés mécaniques en partant d'un lopin métallique identique, ou bien être plus légère tout en présentant des propriétés mécaniques identiques. Il est ainsi possible d'obtenir un gain en masse d'environ 15% par rapport à une barre stabilisatrice 110 réalisée dans le même acier.

Dans l'exemple représenté, la première portion courbée 31 est courbée selon un arc d'hélice circulaire. Cependant, la première portion courbée 31 peut être courbée selon une courbe gauche dépourvue de segments de droite quelconque, par exemple selon un arc d'hélice cylindrique ou un arc d'hélice conique, sans pour autant sortir du cadre de l'invention. Dans certaines variantes, cette courbe gauche présente un rayon de courbure qui est croissant le long de la première portion courbée 31 à mesure que l'on s'éloigne de la portion centrale 11. Dans d'autres variantes, cette courbe gauche présente un rayon de courbure qui est décroissant le long de la première portion courbée 31 à mesure que l'on s'éloigne de la portion centrale 11. Dans l'exemple représenté, la première portion courbée 31 est située entre le premier palier 20 et la portion de fixation 12. Dans d'autres variantes (non représentées), la première portion courbée 31 peut être située entre la portion centrale 11 et le palier 20. Dans encore d'autres variantes (non représentées), la première portion courbée 31 est située entre le palier 20 et la portion de fixation 12, et une autre portion courbée selon une courbe gauche dépourvue de segments de droite peut être située entre la portion centrale 11 et le palier 20.

Dans certains modes de réalisation, entre la partie centrale 11 et la partie de fixation 12', la barre stabilisatrice 10 présente une deuxième portion courbée 32 courbée selon une deuxième courbe gauche comme on peut le voir sur les FIG 4B à 4E.

Comme pour la première portion courbée 31, grâce au fait que la deuxième portion courbée 32 soit courbée selon une courbe gauche dépourvue de segments de droite, elle ne présente pas de coude plan. Par conséquent, la courbure de la première portion, qui est un facteur de concentration de contraintes, est plus faible, et les contraintes mécaniques sont donc réparties plus uniformément dans la deuxième portion courbée 32 que dans les coudes plans de la barre stabilisatrice 110 connue.

Dans l'exemple représenté, la deuxième portion courbée 32 est elle aussi courbée selon un arc d'hélice circulaire. Cependant, la deuxième portion courbée 32 peut être courbée selon une courbe gauche dépourvue de segments de droite quelconque, par exemple selon un arc d'hélice cylindrique ou un arc d'hélice conique, sans pour autant sortir du cadre de l'invention. Dans certaines variantes, cette courbe gauche présente un rayon de courbure qui est croissant le long de la deuxième portion courbée 32 à mesure que l'on s'éloigne de la portion centrale 11. Dans d'autres variantes, cette courbe gauche présente un rayon de courbure qui est décroissant le long de la deuxième portion courbée 32 à mesure que l'on s'éloigne de la portion centrale 11. Dans l'exemple représenté, la deuxième portion courbée 32 est située entre le palier 20' et la portion de fixation 12'. Dans d'autres variantes (non représentées), la deuxième portion courbée 32 peut être située entre la portion centrale 11 et le palier 20'. Dans encore d'autres variantes (non représentées), la deuxième portion courbée 32 est située entre le palier 20' et la portion de fixation 12', et une autre portion courbée selon une courbe gauche dépourvue de segments de droite peut être située entre la portion centrale 11 et le palier 20'.

Dans certains modes de réalisation, la première courbe gauche et la deuxième courbe gauche sont symétriques. Plus particulièrement, dans certains modes de réalisation, la barre stabilisatrice 10 peut présenter une symétrie plane par rapport à un plan passant par le centre de la portion centrale 11. Ceci simplifie la fabrication de la barre stabilisatrice 10 par cintrage tridimensionnel qui sera décrite ci-après, car il suffit alors d'effectuer des opérations symétriques sur les deux extrémités du lopin métallique.

La barre stabilisatrice 10 est en général métallique. Par « métallique », on entend que la barre stabilisatrice 10 est réalisée en un élément métallique ou en un alliage métallique. Dans certains modes de réalisation, la barre stabilisatrice 10 est réalisée en acier, et de préférence en un acier adapté pour subir des traitements thermiques de trempe et de revenu.

La barre stabilisatrice 10 peut avoir une section circulaire, elliptique, ovale, ou ovoïde. Dans le présent exposé, « ovale » désigne une forme comprenant deux arcs de cercles symétriques entre eux dont les extrémités respectives sont reliées par deux droites parallèles entre elles, et qui présente donc deux axes de symétrie. En outre, la barre stabilisatrice 10 peut avoir une section pleine ou bien une section creuse. Dans certains modes de réalisation, la barre stabilisatrice 10 présente une section variable le long de sa longueur.

La barre stabilisatrice 10 peut avoir subi des traitements thermiques, par exemple de trempe et de revenu, prévus pour augmenter sa résistance mécanique et sa durabilité. La surface extérieure de la barre stabilisatrice 10 peut être peinte et/ou avoir subi divers traitements de surface, tels que des traitements anti-corrosion et/ou anti-gravillons, etc., prévus pour augmenter la résistance mécanique et la durabilité de la barre stabilisatrice 10.

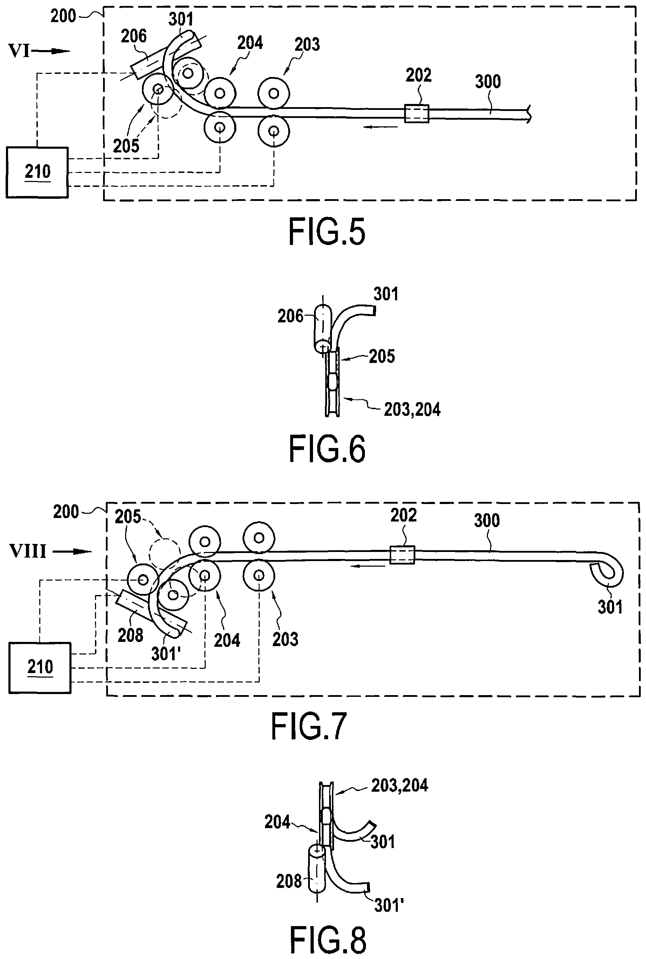

Les FIG 5 à 8 représentent un exemple de procédé de fabrication de la barre stabilisatrice 10 et le dispositif de fabrication 200 associé.

On va tout d'abord décrire le dispositif de fabrication 200. Le dispositif de fabrication 200 est prévu pour fabriquer la barre stabilisatrice 10 par cintrage tridimensionnel d'un lopin métallique 300. Par la suite, on appellera donc « cintreuse 200 » le dispositif de fabrication 200.

La cintreuse 200 est prévue pour saisir et cintrer un lopin métallique 300. Par « lopin métallique », on entend un produit métallique, allongé et rectiligne. Par « métallique », on entend que le lopin 300 est réalisé en un élément métallique ou en un alliage métallique. Dans certains modes de réalisation, le lopin métallique 300 est en acier, et de préférence en un acier adapté pour subir des traitements thermiques de trempe et de revenu.

Le lopin métallique 300 peut avoir une section circulaire, elliptique, ovale ou ovoïde, qui peut être pleine ou bien creuse, correspondant à la section désirée de la barre stabilisatrice 10 à fabriquer. Dans certains modes de réalisation, le lopin métallique 300 présente une section variable le long de sa longueur.

La cintreuse 200 comprend un mors 202. Le mors 202 est prévu pour saisir le lopin métallique 300. En outre, le mors 202 est prévu pour provoquer un déplacement relatif entre le lopin métallique 300 et la cintreuse 200. À cet effet, le mors 202 est mobile, par exemple selon deux ou trois degrés de liberté en translation.

Dans un exemple particulier, le mors 202 déplace le lopin métallique 300 en translation le long de sa direction longitudinale, comme indiqué sur la FIG 5.

La cintreuse 200 comprend en outre un jeu de galets, qui dans l'exemple représenté comprend trois paires de galets 203, 204, 205. Parmi les trois paires de galets 203, 204, 205, la paire de galets 205 est mobile dans un plan, ci-après désigné par « premier plan de cintrage », et qui correspond au plan de la feuille sur la FIG 5. À cet effet, les axes de rotation des galets de la paire de galets 205 sont mobiles, de telle sorte que leur intersection avec le premier plan de cintrage est elle aussi mobile.

Il va sans dire que le jeu de galets peut comprendre un nombre quelconque de paires de galets, et/ou que plus d'une paire de galets peut être mobile dans le premier plan de cintrage, en fonction de la forme que l'on souhaite donner à la barre stabilisatrice 10 à fabriquer.

La cintreuse 200 comprend un outre un rouleau orientable mobile 206, comme représenté sur les FIG 5 et 6. Le rouleau orientable mobile 206 est prévu pour appliquer un effort sur le lopin métallique 300 selon une direction non comprise dans le premier plan de cintrage comme cela sera détaillé ci-après. À cet effet, l'axe de rotation du rouleau orientable mobile 206 fait un angle non droit avec le premier plan de cintrage. En outre, l'axe de rotation du rouleau orientable mobile 206 est mobile en translation, et l'angle que fait cet axe de rotation avec le premier plan de cintrage est ajustable.

La cintreuse 200 comprend en outre une unité de commande 210 commandant le déplacement du mors 202 et des axes de rotation du jeu de galets 203, 204, 205 et du rouleau orientable mobile 206. Dans certains modes de réalisation, l'unité de commande 210 est une unité de commande numérique programmable, apte à effectuer cette commande à partir de programmes stockés à l'avance.

On va maintenant décrire la fabrication de la barre stabilisatrice 10.

On fournit tout d'abord le lopin métallique 300 en entrée de la cintreuse 200. Le lopin métallique 300 est initialement allongé et rectiligne, comme indiqué précédemment, et présente une première extrémité 301 et une deuxième extrémité 301' opposée à la première extrémité 301.

La première extrémité 301 est introduite dans la cintreuse 200 et saisie par le mors 202. Ensuite, la cintreuse 200 provoque un déplacement relatif entre elle et le lopin métallique 300. Dans l'exemple représenté, le mors 202 déplace le lopin métallique 300 en translation le long de sa direction longitudinale, jusqu'à ce que la première extrémité 301 soit saisie par le jeu de galets.

Une fois que la première extrémité 301 est saisie par la paire de galets 205, cette dernière effectue un mouvement comprenant une translation (vers le haut de la FIG 5) doublée d'une rotation, tout en restant dans le premier plan de cintrage. Ce mouvement est de préférence tel que la droite reliant les axes de rotation des deux galets de la paire de galets 205 demeure normale à la tangente du lopin métallique 300 au niveau du contact entre la paire de galets 205 et le lopin métallique 300. Pendant ce temps, les paires de galets 203, 204 continuent d'entraîner le lopin métallique 300 en mouvement vers la paire de galets 205. Par ailleurs, le mouvement de la paire de galets 205 en translation et en rotation est commandé pour être synchronisé avec le mouvement d'entraînement du lopin métallique 300. Il en résulte que la première extrémité 301 est déformée élastoplastiquement en flexion dans le premier plan de cintrage.

Simultanément avec cette déformation en flexion, le rouleau orientable mobile 206 effectue un mouvement de translation selon une direction non comprise dans le premier plan de cintrage, tout en restant en contact avec la première extrémité 301, comme représenté sur la FIG 6. Ainsi, le rouleau orientable mobile 206 applique à la première extrémité 301 un effort selon cette direction non comprise dans le premier plan de cintrage. Il en résulte que la première extrémité 301 est en outre déformée en torsion, de sorte que la première extrémité 301 sort du premier plan de cintrage comme représenté sur la FIG 6. Ainsi, la première extrémité 301 est déformée selon une première courbe gauche. En outre, puisque le rouleau orientable mobile 206 applique continûment un effort à la première extrémité 301, cette première courbe gauche est dépourvue de segments de droite.

Les étapes qui précèdent permettent de courber la première extrémité 301 selon la courbe gauche souhaitée, en commandant convenablement la vitesse de déplacement du lopin métallique 301, le mouvement de la paire de galets 205, et le mouvement du rouleau orientable mobile 206.

Dans l'exemple représenté sur la FIG 6, le mouvement en translation du rouleau orientable mobile 206 s'effectue selon une direction orthogonale au premier plan de cintrage. Cette direction peut toutefois faire un angle quelconque non nul avec le premier plan de cintrage, sans pour autant sortir du cadre des revendications.

En outre, la direction de l'effort appliqué par le rouleau orientable mobile 206 peut être variable.

On notera que le cintrage tridimensionnel qui vient d'être décrit peut être effectué à température ambiante, ou bien à tiède, c'est-à-dire à une température supérieure à la température ambiante et allant jusqu'à 700°C.

Une fois que la déformation de la première extrémité 301 est terminée, le rouleau orientable mobile 206 est retiré, et le jeu de galets 203, 204, 205 s'ouvre pour libérer la première extrémité 301 déformée. On notera que la première extrémité 301 déformée peut subir, dans une certaine mesure, un retour élastique. Ce retour élastique peut être prévu à l'avance, par exemple à l'aide d'essais et/ou de méthodes de simulation numérique, et la commande de la vitesse de déplacement du lopin métallique 301, du mouvement de la paire de galets 205, du mouvement du rouleau orientable mobile 206 peut être adaptée en fonction du retour élastique prévu.

Ensuite, dans le cas où on souhaite déformer la deuxième extrémité 301' selon une deuxième courbe gauche dépourvue de segments de droite, on introduit la deuxième extrémité 301' dans la cintreuse 200, la deuxième extrémité 301' étant saisie par le mors 202. Ensuite, la cintreuse 200 provoque un déplacement relatif entre elle et le lopin métallique 300. Dans l'exemple représenté, le mors 202 déplace le lopin métallique 300 en translation le long de sa direction longitudinale, jusqu'à ce que la deuxième extrémité 301' soit saisie par le jeu de galets 203, 204, 205. Ensuite, comme illustré sur les FIG 7 et 8, à l'aide du jeu de galets 203, 204, 205, et d'un rouleau orientable mobile 208 semblable au rouleau orientable mobile 206, pendant ce déplacement relatif, on applique à la deuxième extrémité 301' une déformation en flexion dans un deuxième plan de cintrage, qui correspond au plan de la feuille sur la FIG 7, et une déformation en torsion de sorte que la deuxième extrémité 301' sort du deuxième plan de cintrage comme représenté sur la FIG 8. Ces déformations sont semblables à celles de la première extrémité 301 et ne sont donc pas décrites en détail à nouveau.

À l'issue de ces opérations, la deuxième extrémité 301' est déformée selon une deuxième courbe gauche dépourvue de segments de droite. Cette deuxième courbe gauche peut être telle que la première courbe gauche et la deuxième courbe gauche sont symétriques. Pour cela, le rouleau orientable mobile 208 peut être disposé et actionné symétriquement par rapport au rouleau orientable mobile 206. En outre, cette première courbe gauche et cette deuxième courbe gauche peuvent être telles que le lopin métallique 300 déformé présente une symétrie par rapport à un plan.

Ensuite, dans une étape non représentée sur les dessins, les portions de fixation 12, 12' décrites plus haut sont installées respectivement sur les extrémités 301 et 301' déformées, afin de parvenir à la barre stabilisatrice 10. Avant ou après cette installation, divers traitements thermiques appropriés (trempage et revenu, par exemple) peuvent être appliqués à la et barre stabilisatrice 10, et divers traitements de surface appropriés (peinture, traitement anti-corrosion, traitement anti-gravillons, par exemple) peuvent être appliqués à la surface de la barre stabilisatrice 10. Enfin, les paliers 20, 20' décrits plus haut peuvent être installés sur la barre stabilisatrice 10.

Bien que la présente invention ait été décrite en se référant à des exemples de réalisation spécifiques, des modifications peuvent être apportées à ces exemples sans sortir de la portée générale de l'invention telle que définie par les revendications. En particulier, la description et les dessins doivent être considérés dans un sens illustratif plutôt que restrictif.

## Revendications

1. Procédé de fabrication d'une barre stabilisatrice (10) pour un véhicule, le procédé comprenant :
la fourniture d'un lopin métallique (300) présentant une première extrémité (301) et une deuxième extrémité (301') ; et
le cintrage de la première extrémité (301) à l'aide d'un dispositif de cintrage (200), ledit cintrage de la première extrémité (301) comprenant le fait de :
provoquer un déplacement relatif entre le dispositif de cintrage (200) et le lopin métallique (300) ; et
pendant ledit déplacement relatif, fléchir la première extrémité (301) dans un premier plan de cintrage et simultanément appliquer à la première extrémité (301) un effort selon une direction non comprise dans le premier plan de cintrage, de sorte que la première extrémité (301) est courbée selon une première courbe gauche dépourvue de segments de droite
**caractérisé en ce que** le dispositif de cintrage (200) comprend un jeu de galets (203, 204, 205), et le jeu de galets comprend au moins une paire de galets (205) qui est mobile dans le premier plan de cintrage, la première extrémité (301) étant fléchie dans le premier plan de cintrage par ladite au moins une paire de galets (205), et
**en ce que** le dispositif de cintrage (200) comprend au moins un rouleau orientable mobile (206), ledit effort selon une direction non comprise dans le premier plan de cintrage étant appliqué à la première extrémité par ledit au moins un rouleau orientable mobile (206).

2. Procédé selon la revendication 1, dans lequel le dispositif de cintrage (200) comprend un mors mobile (202) prévu pour saisir le lopin métallique (300), ledit déplacement relatif entre le dispositif de cintrage (200) et le lopin métallique (300) étant provoqué par ledit mors mobile (202).

3. Procédé selon la revendication 1 ou 2, comprenant en outre le cintrage de la deuxième extrémité (301') du lopin métallique (300) à l'aide du dispositif de cintrage (200), ledit cintrage de la deuxième extrémité comprenant le fait de :
provoquer un déplacement relatif entre le dispositif de cintrage (200) et le lopin métallique (300) ; et
pendant ledit déplacement relatif, fléchir la deuxième extrémité (301') dans un deuxième plan de cintrage et simultanément appliquer à la deuxième extrémité (301') un effort selon une direction non comprise dans le deuxième plan de cintrage, de sorte que la deuxième extrémité (301') est courbée selon une deuxième courbe gauche dépourvue de segments de droite.

4. Procédé selon l'une quelconque des revendications 1 à 3, dans lequel le lopin métallique (300) présente une section circulaire, elliptique, ovale, ou ovoïde.

5. Procédé selon la revendication 4, dans lequel le lopin métallique (300) présente une section variable le long de sa longueur.

## Patentansprüche

1. Verfahren zur Herstellung einer Stabilisatorstange (10) für ein Fahrzeug, wobei das Verfahren umfasst:
die Bereitstellung eines Metallrohlings (300), der ein erstes Ende (301) und ein zweites Ende (301') aufweist, und
die Biegewalzung des ersten Endes (301) mithilfe einer Biegewalzvorrichtung (200), wobei die Biegewalzung des ersten Endes (301) (die Tatsache) umfasst:
Veranlassen einer relativen Verschiebung zwischen der Biegewalzvorrichtung (200) und dem Metallrohling (300), und
Biegen des ersten Endes (301) in einer ersten Biegewalzebene während der relativen Verschiebung, und gleichzeitig Ausüben einer Kraft auf das erste Ende (301) entlang einer Richtung, die nicht in der ersten Biegewalzebene enthalten ist, auf solche Weise, dass das erste Ende (301) gemäß einer ersten Linkskrümmung gekrümmt ist, die frei von Rechtssegmenten ist,
**dadurch gekennzeichnet, dass** die Biegewalzvorrichtung (200) einen Satz von Laufrollen (203, 204, 205) umfasst, und der Satz von Laufrollen zumindest ein Paar von Laufrollen (205) umfasst, das in der ersten Biegewalzebene beweglich ist, wobei das erste Ende (301) in der ersten Biegewalzebene von dem zumindest einen Paar von Laufrollen (205) gebogen wird, und
dass die Biegewalzvorrichtung (200) zumindest eine ausrichtbare bewegliche Rolle (206) umfasst, wobei die Kraft entlang einer Richtung, die nicht in der Biegewalzebene enthalten ist, auf das erste Ende durch die zumindest eine ausrichtbare bewegliche Rolle (206) ausgeübt wird.

2. Verfahren nach Anspruch 1, wobei die Biegewalzvorrichtung (200) eine bewegliche Spannbacke (202) umfasst, die dazu vorgesehen ist, den Metallrohling (300) zu ergreifen, wobei die relative Verschiebung zwischen der Biegewalzvorrichtung (200) und dem Metallrohling (300) von der beweglichen Spannbacke (202) veranlasst wird.

3. Verfahren nach Anspruch 1 oder 2, ferner umfassend die Biegewalzung des zweiten Endes (301') des Metallrohlings (300) mithilfe der Biegewalzvorrichtung (200), wobei die Biegewalzung des zweiten Endes (die Tatsache) umfasst:
Veranlassen einer relativen Verschiebung zwischen der Biegewalzvorrichtung (200) und dem Metallrohling (300), und
Biegen des zweiten Endes (301') in einer zweiten Biegewalzebene während der relativen Verschiebung, und gleichzeitig Ausüben einer Kraft auf das zweite Ende (301') entlang einer Richtung, die nicht in der zweiten Biegewalzebene enthalten ist, auf solche Weise, dass das zweite Ende (301') gemäß einer zweiten Linkskrümmung gekrümmt ist, die frei von Rechtssegmenten ist.

4. Verfahren nach einem der Ansprüche 1 bis 3, wobei der Metallrohling (300) einen kreisförmigen, elliptischen, ovalen oder eiförmigen Querschnitt aufweist.

5. Verfahren nach Anspruch 4, wobei der Metallrohling (300) entlang seiner Länge einen variablen Querschnitt aufweist.

## Claims

1. A manufacturing method for a stabilizer bar (10) for a vehicle, the method comprising:
supplying of a metal blank (300) having a first end (301) and a second end (301'); and
bending of the first end (301) by means of a bending device (200), said bending of the first end (301) comprising the fact of:
causing a relative displacement between the bending device (200) and the metal blank (300); and
during said relative displacement, bending the first end (301) in a first bending plane and simultaneously applying to the first end (301) a force in a direction not comprised in the first bending plane, so that the first end (301) is curved according to a first space curve devoid of straight segments,
**characterized in that** the bending device (200) comprises a set of pulleys (203, 204, 205), and the set of pulleys comprises at least one pair of pulleys (205) which is movable in the first bending plane, the first end (301) being bent in the first bending plane by said at least one pair of pulleys (205), and
**in that** the bending device (200) comprises at least one movable steerable roller (206), said force in a direction not comprised in the first bending plane being applied to the first end by said at least one movable steerable roller (206).

2. The method according to claim 1, wherein the bending device (200) comprises a movable jaw (202) designed to seize the metal blank (300), said relative displacement between the bending device (200) and the metal blank (300) being caused by said movable jaw (202).

3. The method according to claim 1 or 2, further comprising the bending of the second end (301') of the metal blank (300) by means of the bending device (200), said bending of the second end comprising the fact of:
causing a relative displacement between the bending device (200) and the metal blank (300); and
during said relative displacement, bending the second end (301') in a second bending plane and simultaneously applying to the second end (301') a force in a direction not comprised in the second bending plane, so that the second end (301') is curved according to a second space curve devoid of straight segments.

4. The method according to any one of claims 1 to 3, wherein the metal blank (300) has a circular, elliptical, oval or ovoid cross section.

5. The method according to claim 4, wherein the metal blank (300) has a variable cross section along its length.
